# EUROPEAN PATENT APPLICATION

(11) **EP 4 343 911 A1**
(43) Date of publication of application: **27.03.2024**
(21) Application number: 22848656.9
(22) Date of filing: 29.07.2022
(51) Int. Cl.: H01M 10/052

(54) **BATTERY**

(30) Priority: 29.07.2021 CN 202110867172
(71) Applicant: Zhuhai CosMX Battery Co., Ltd., Zhuhai, Guangdong 519180 (CN)
(72) Inventor: WEI, Zhida, Zhuhai, Guangdong 519180 (CN); PENG, Ning, Zhuhai, Guangdong 519180 (CN); XIE, Bin, Zhuhai, Guangdong 519180 (CN)
(74) Representative: Bandpay & Greuter
(86) International application number: PCT/CN2022/108783
(87) International publication number: WO 2023/006051

(57) **Abstract**

The present application provides a battery, and relates to the field of battery technologies, so as to solve the technical problems of poor safety and poor working stability of the existing lithium batteries in a preparation process. A first conductive member is disposed within an accommodating cavity of the battery, and an insulating adhesive layer is disposed between the first conductive member and a bottom cover, and connects the first conductive member and the bottom cover. A through hole is disposed on the bottom cover, and is covered by the first conductive member. An annular side wall is welded with the bottom cover at an edge on a side close to the bottom cover to form a welding mark. There is a first spacing between the welding mark and the insulating adhesive layer, and a width of the first spacing is more than 3 times of a width of the welding mark. A first electrode tab of a battery core is electrically connected with the first conductive member, and a second electrode tab of the battery core is electrically connected with the housing. According to the present application, the safety of the battery in the preparation process and the working stability of the battery can be improved.

## Description

This application claims priority to Chinese Patent Application No. 202110867172.9 filed with the China National Intellectual Property Administration on July 29, 2021 and titled "BATTERY", the entire content of which is incorporated herein by reference.

### TECHNICAL FIELD

The present application relates to the field of battery technologies and, in particular, to a battery.

### BACKGROUND

Lithium batteries have advantages of high energy density, long service life and environment-friendliness. The lithium batteries are widely used in industries such as mobile phones, notebook computers, digital cameras, electric vehicles, power tools, new energy vehicles, etc.

The current lithium batteries generally include a battery core and a packaging housing in which the battery core is located, where the packaging housing includes a top shell and a bottom cover which are mutually covered, and the top shell and the bottom cover are connected by welding. The battery core is formed by winding an anode electrode and a cathode electrode, and a separator is disposed between the anode electrode and the cathode electrode. Electrode tabs of the battery core is electrically connected with the packaging housing through an electrical connection assembly, and an insulating adhesive tape is disposed between the electrode tabs and the packaging housing and between the battery core and the bottom cover.

However, the current lithium batteries have poor safety in the preparation process and poor working stability.

### SUMMARY

In order to solve at least one problem mentioned in the background, the present application provides a battery, which can improve safety of the battery in a preparation process and working stability of the battery.

In order to achieve the above objectives, the present application provides a battery including a housing which is conductive and a battery core, the housing includes a top shell and a bottom cover, the top shell includes a top cover and an annular side wall connected to the top cover, the top shell is covered on the bottom cover to collaboratively define an accommodating cavity, and the battery core is located in the accommodating cavity.

A first conductive member is disposed within the accommodating cavity, and an insulating adhesive layer is disposed between the first conductive member and the bottom cover, and the insulating adhesive layer connects the first conductive member and the bottom cover; a through hole is disposed on the bottom cover, and the first conductive member covers the through hole. The annular side wall is welded with the bottom cover at an edge on a side close to the bottom cover to form a welding mark.

There is a first spacing between the welding mark and the insulating adhesive layer, and a width of the first spacing is more than 3 times of a width of the welding mark.

The first electrode tab of the battery core is electrically connected with the first conductive member, and the second electrode tab of the battery core is electrically connected with the housing.

In a battery provided in the present application, by disposing a top shell and a bottom cover, a battery core may be filled in an accommodating cavity formed by the top shell and the bottom cover, and the top shell and the bottom cover is conveniently welded and sealed after the battery core is filled. By disposing a first conductive member, a first electrode tab of the battery core may be electrically connected with an external electrode. By disposing an insulating adhesive layer, electrical contact between the first conductive member and the bottom cover can be avoided. By disposing a first spacing, on the one hand, during the welding process, a welding mark may be prevented from contacting with the insulating adhesive layer, thus avoiding safety problems and improving safety of the battery in a preparation process; on the other hand, a high temperature generated by welding is prevented from affecting bonding performance of the insulating adhesive layer, thereby avoiding affecting insulating performance of the insulating adhesive layer and improving working stability of the battery.

In the above battery, it is optional that the annular side wall has a flange at the edge on the side close to the bottom cover, and the flange is welded with the bottom cover to form the welding mark, and the welding mark are disposed around an outer periphery of the annular side wall.

In the above battery, it is optional that the width of the welding mark is greater than 0 mm and less than or equal to 1 mm.

In the above battery, it is optional that a ratio of a coverage area of the first conductive member on the bottom cover to an area of the bottom cover is 0.4 to 0.99.

In the above battery, it is optional that the battery core includes at least two electrode sheets with opposite polarities, the battery core has a stacking region, the at least two electrode sheets located in the stacking region are stacked with each other, and the electrode sheets located in the stacking region are parallel to a surface of the bottom cover and/or a top surface of the top shell. An isolation membrane is disposed between two electrode sheets with opposite polarities.

In the above battery, it is optional that the first conductive member includes a first connection plate and a first bending plate which are connected with each other, the first connection plate is attached to the bottom cover, the first bending plate is located between the battery core and the annular side wall, and the first electrode tab is welded on the first bending plate.

In the above battery, it is optional that the first connection plate has a bump on a side far from the accommodating cavity, and the bump penetrates through the through hole.

In the above battery, it is optional that there is a first gap between an outer periphery edge of the bump and a hole wall of the through hole. A width of the first gap ranges from 0.1 mm to 2 mm. The insulating adhesive layer has an overflow portion located in the first gap.

In the above battery, it is optional that the first gap is filled with a sealing insulator.

In the above battery, it is optional that there is a second spacing between the first bending plate and the annular side wall, and the second spacing ranges from 0.2 mm to 3 mm.

In the above battery, it is optional that a first insulating layer is disposed between the first bending plate and the battery core, and/or, a second insulating layer is disposed between the first bending plate and the annular side wall.

In the above battery, it is optional that the second electrode tab is welded to the annular side wall.

In the above battery, it is optional that a distance between the first electrode tab and the annular side wall is greater than a distance between the second electrode tab and the annular side wall.

In the above battery, it is optional that a second conductive member is disposed in the accommodating cavity, and at least part of the second conductive member is located between the second electrode tab and the housing, and electrically connects the second electrode tab and the housing.

The second conductive member and the first conductive member are insulated from each other.

In the above battery, it is optional that the second conductive member includes a second connection plate and a second bending plate which are connected with each other, the second connection plate is attached to the bottom cover, the second bending plate is located between the battery core and the annular side wall, and the second electrode tab is welded on the second bending plate.

In the above battery, it is optional that a height difference between the first connection plate and the second connection plate is less than 0.3 mm

There is a second gap between the first connection plate and the second connection plate.

A width of the second gap ranges from 0.5 mm to 5 mm, and/or, the second gap is filled with a porous insulator.

In the above battery, it is optional that the first electrode tab and the second electrode tab are located at a same end of the battery core. The first bending plate and the second bending plate are located at a same end of the battery core.

In the above battery, it is optional that the first electrode tab is located on a side of the first bending plate facing away from the battery core, and/or the second electrode tab is located on a side of the second bending plate facing away from the battery core.

In the above battery, it is optional that a third insulating layer is further included, which is located between the battery core and the first conductive member, and between the battery core and the second conductive member.

In the above battery, it is optional that there is a third spacing between an end of the first electrode tab and an end of the second electrode tab, and the third spacing is greater than or equal to 0 mm and less than or equal to 1 mm.

In the above battery, it is optional that an area of the first connection plate is larger than an area of the second connection plate, and a ratio of the area of the first connection plate to the area of the second connection plate ranges from 1 to 9.9.

In the above battery, it is optional that the annular side wall is provided with a reinforcing sheet and a liquid injection port which are spaced apart, and the reinforcing sheet and the second electrode tab are located on opposite sides of the annular side wall, and the liquid injection port links an outside of the housing to the accommodating cavity. A pressure relief groove is disposed on the top cover, and the pressure relief groove is disposed close to the first electrode tab or the second electrode tab.

A sealing sheet is disposed on the liquid injection port, and the sealing sheet seals the liquid injection port.

And/or, the battery core is further provided with a finishing glue, and the finishing glue is located on a side of the battery core close to the top cover.

### BRIEF DESCRIPTION OF DRAWINGS

Preferred embodiments of the present application are described below with reference to the drawings. Among the drawings:
FIG. 1 is a schematic structural diagram of a battery provided in an embodiment of the present application from a first perspective;
FIG. 2 is a schematic structural diagram of a battery provided in an embodiment of the present application from a second perspective;
FIG. 3 is a side view of a housing of a battery provided in an embodiment of the present application;
FIG. 4 is a top view of a housing of a battery provided in an embodiment of the present application;
FIG. 5 is a schematic structural diagram of a conductive member, a bottom cover and a battery core of a battery provided in an embodiment of the present application;
FIG. 6 is an exploded view of a battery provided in an embodiment of the present application;
FIG. 7 is a schematic structural diagram of a bottom cover and a conductive member of a battery provided in an embodiment of the present application;
FIG. 8 is an exploded view of a bottom cover and a conductive member of a battery provided in an embodiment of the present application from a first perspective;
FIG. 9 is an exploded view of a bottom cover and a conductive member of a battery provided in an embodiment of the present application from a second perspective;
FIG. 10 is a partial schematic structural diagram of a battery provided in an embodiment of the present application;
FIG. 11 is an exploded view of another battery provided in the embodiment of the present application;
FIG. 12 is a partial schematic structural diagram of another battery provided in an embodiment of the present application;
FIG. 13 is a schematic structural diagram of an end of a battery core of a battery provided in an embodiment of the present application; and
FIG. 14 is a schematic structural diagram of a tail of a battery core of a battery provided in an embodiment of the present application.

### DETAILED DESCRIPTION

As mentioned in the background, in the related art, a packaging housing of a lithium battery is welded by a top shell and a bottom cover, and an insulating adhesive tape is disposed between the battery core and the bottom cover. In a process of welding the packaging housing, since a welding mark is in close proximity to the battery core and the insulating adhesive tape, on the one hand, the welding mark is easy to contact with the battery core or the insulating adhesive tape, resulting in potential safety hazards; on the other hand, a high temperature during the welding is easy to affect bonding performance of the insulating adhesive tape, resulting in bonding failure and insulation failure in a region of the insulating adhesive tape close to the welding mark, thus affecting working stability of the lithium battery.

In a battery provided in the present application, by disposing a top shell and a bottom cover, a battery core may be filled in an accommodating cavity formed by the top shell and the bottom cover, and the top shell and the bottom cover is conveniently welded and sealed after the battery core is filled. By disposing a first conductive member, a first electrode tab of the battery core may be electrically connected with an external electrode. By disposing an insulating adhesive layer, electrical contact between the first conductive member and the bottom cover can be avoided. By disposing a first spacing, on the one hand, during the welding process, a welding mark may be prevented from contacting with the insulating adhesive layer, thus avoiding safety problems and improving safety of the battery in a preparation process; on the other hand, a high temperature generated by welding is prevented from affecting bonding performance of the insulating adhesive layer, thereby avoiding affecting insulating performance of the insulating adhesive layer and improving working stability of the battery.

In order to make the above objectives, technical solutions and advantages of the present application clearer, the technical solutions in the embodiments of the present disclosure will be described in more details in conjunction with the drawings in the preferred embodiments of the present application below. Throughout the drawings, the same or similar reference numerals indicate the same or similar parts or parts with the same or similar functions. The described embodiments are some but not all of the embodiments of the present application. The embodiments described below with reference to the drawings are exemplary and are intended to explain the present application, but not to be understood as limitations of the present application. Based on the embodiments in the present application, all other embodiments obtained by those of ordinary skill in this art without creative work shall fall within the protection scope of the present application. Hereinafter, the embodiments of the present application will be described in detail with reference to the drawings.

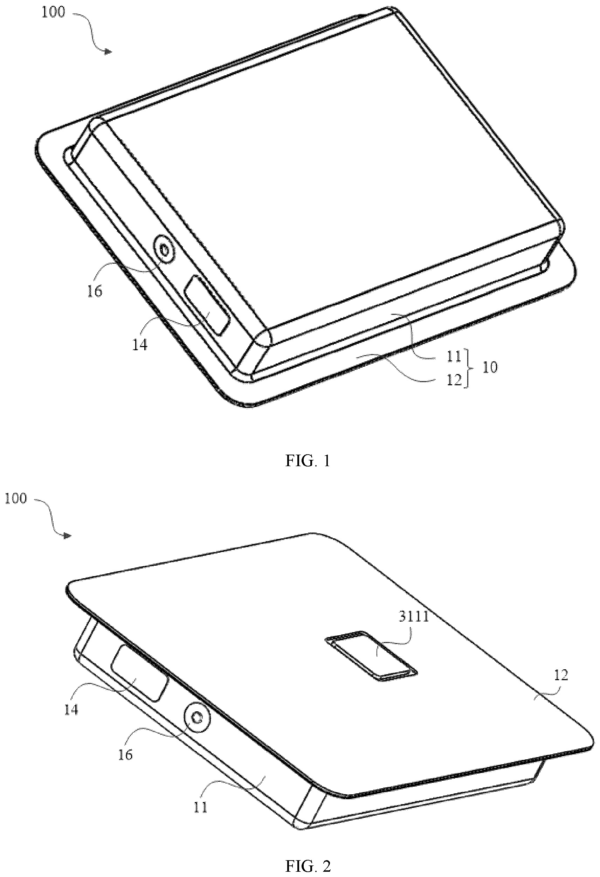

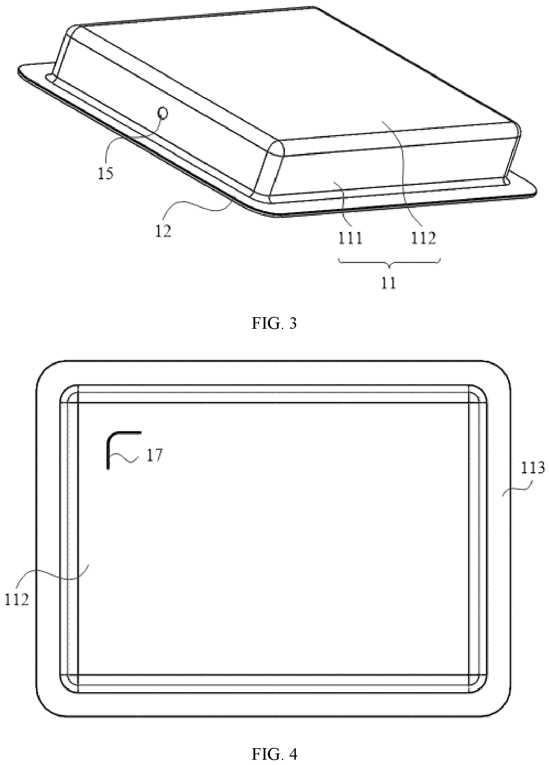

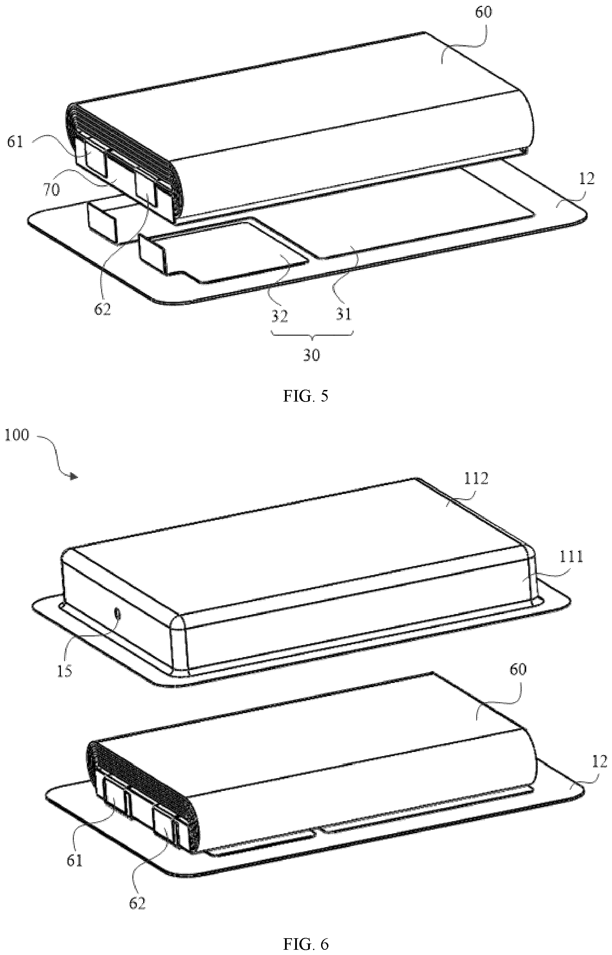

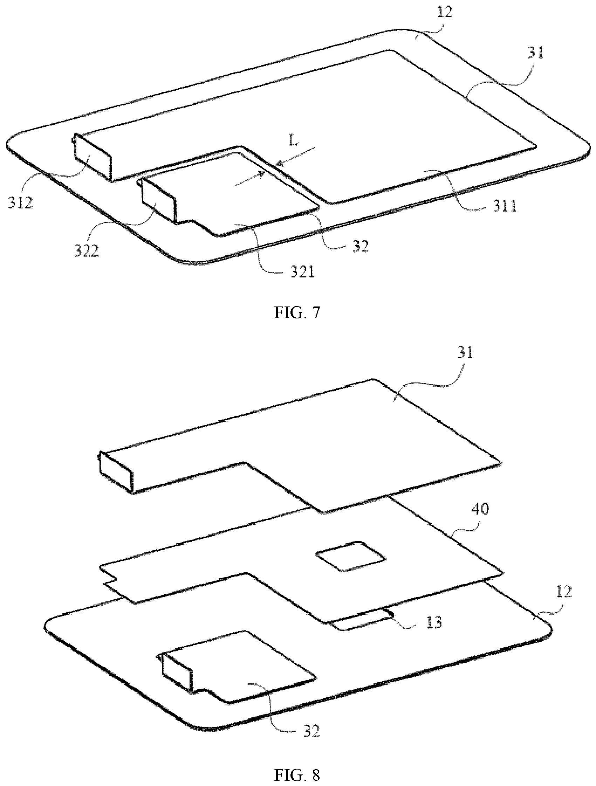

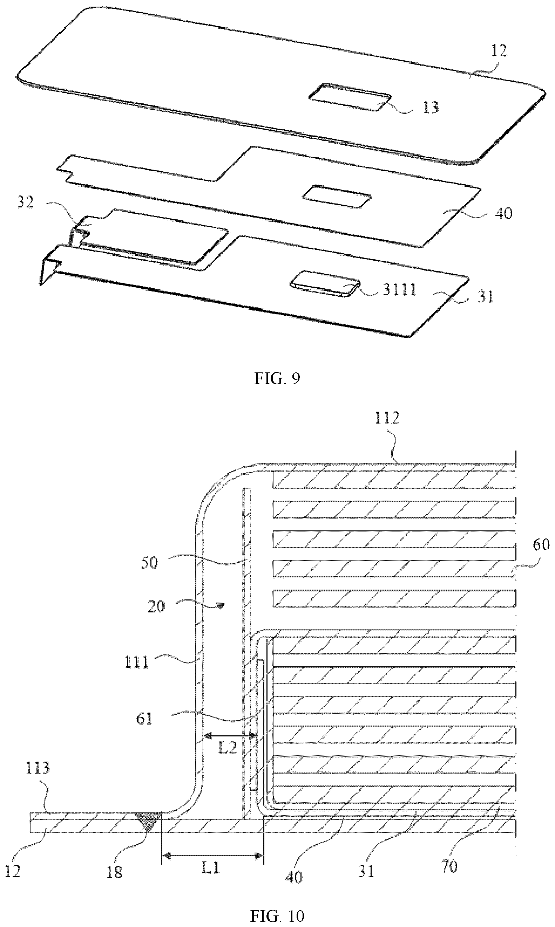

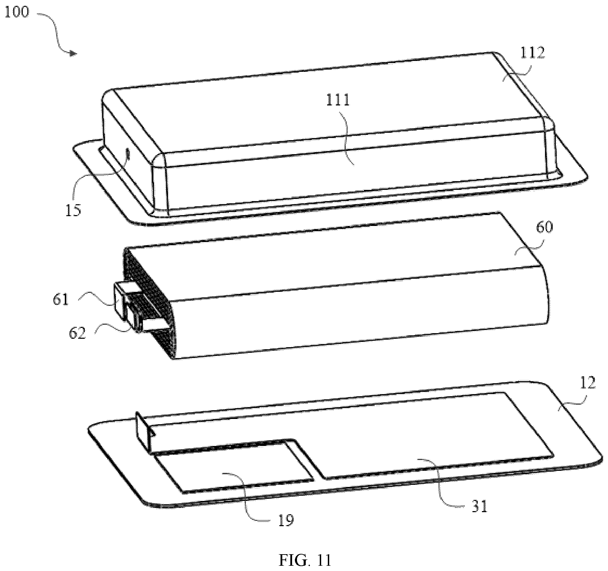

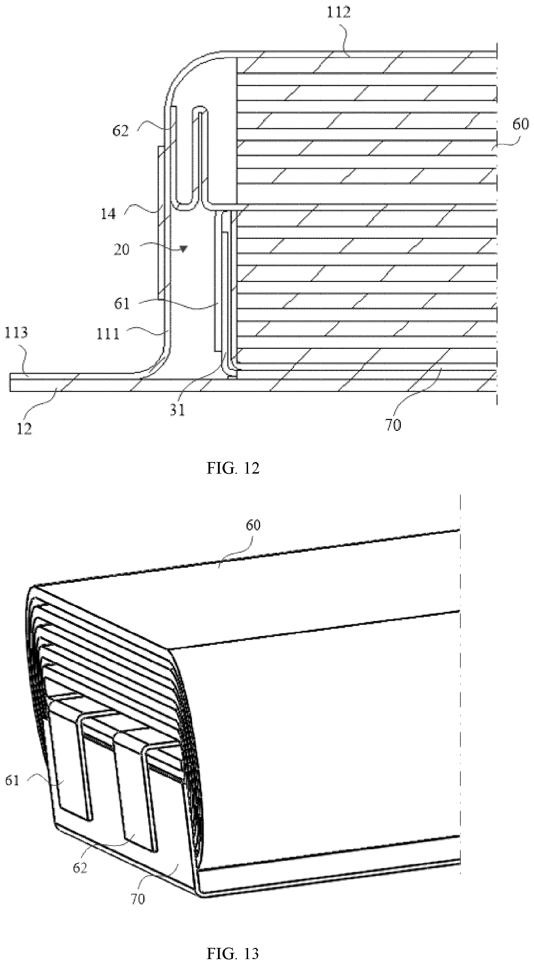

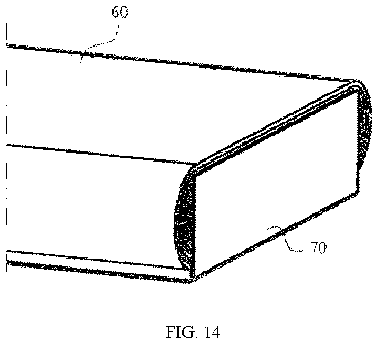

FIG. 1 is a schematic structural diagram of a battery provided in an embodiment of the present application from a first perspective. FIG. 2 is a schematic structural diagram of a battery provided in an embodiment of the present application from a second perspective. FIG. 3 is a side view of a housing of a battery provided in an embodiment of the present application. FIG. 4 is a top view of a housing of a battery provided in an embodiment of the present application. FIG. 5 is a schematic structural diagram of a conductive member, a bottom cover and a battery core of a battery provided in an embodiment of the present application. FIG. 6 is an exploded view of a battery provided in an embodiment of the present application. FIG. 7 is a schematic structural diagram of a bottom cover and a conductive member of a battery provided in an embodiment of the present application. FIG. 8 is an exploded view of a bottom cover and a conductive member of a battery provided in an embodiment of the present application from a first perspective. FIG. 9 is an exploded view of a bottom cover and a conductive member of a battery provided in an embodiment of the present application from a second perspective. FIG. 10 is a partial schematic structural diagram of a battery provided in an embodiment of the present application. FIG. 11 is an exploded view of another battery provided in an embodiment of the present application. FIG. 12 is a partial schematic structural diagram of another battery provided in an embodiment of the present application. FIG. 13 is a schematic structural diagram of an end of a battery core of a battery provided in an embodiment of the present application. FIG. 14 is a schematic structural diagram of a tail of a battery core of a battery provided in an embodiment of the present application.

Referring to FIG. 1 to FIG. 14, an embodiment of the present application provides a battery. The battery 100 includes a housing 10 which is conductive and a battery core 60, the housing 10 includes a top shell 11 and a bottom cover 12, the top shell 11 includes a top cover 112 and an annular side wall 111 connected to the top cover 112, the top shell 11 is covered on the bottom cover 12 to collaboratively define an accommodating cavity 20, and the battery core 60 is located in the accommodating cavity 20. A first conductive member 31 is disposed within the accommodating cavity 20, and an insulating adhesive layer 40 is disposed between the first conductive member 31 and the bottom cover 12, the insulating adhesive layer 40 connects the first conductive member 31 and the bottom cover 12, and the insulating adhesive layer 40 may prevent electrical contact between the first conductive member 31 and the bottom cover 12. Exemplarily, the insulating adhesive layer 40 may be insulating glue or an injection-molded insulator, where the injection-molded insulator is provided with adhesive glue. A first electrode tab 61 of the battery core 60 is electrically connected with the first conductive member 31, and a second electrode tab 62 of the battery core 60 is electrically connected with the housing 10. A through hole 13 is disposed on the bottom cover 12, and the first conductive member 31 covers the through hole 13, so that part of the first conductive member 31 may be exposed outside the accommodating cavity 20, which is convenient for electrical connection with an external electrode.

As shown in FIG. 10, the annular side wall 111 is welded to the bottom cover 12 at an edge on a side close to the bottom cover 12 to form a welding mark 18. There is a first spacing L1 between the welding mark 18 and the insulating adhesive layer 40, and a width of the first spacing L1 is more than three times a width of the welding mark 18. In this way, on the one hand, during the welding, the welding mark 18 can be prevented from contacting with the insulating adhesive layer 40, thus avoiding safety problems and improving the safety of the battery 100 in the preparation process; on the other hand, a high temperature generated by welding is prevented from affecting bonding performance of the insulating adhesive layer 40, thereby avoiding affecting insulating performance of the insulating adhesive layer 40 and improving working stability of the battery 100.

Specifically, as shown in FIG. 10, the annular side wall 111 has a flange 113 at an edge on a side close to the bottom cover 12, and the flange 113 is welded with the bottom cover 12, and the welding mark 18 is formed, and the welding mark 18 is disposed around an outer periphery of the annular side wall 111. By disposing the flange 113, an attaching area between the top shell 11 and the bottom cover 12 can be increased, making them easy to be welded, and stability of connection between the top shell 11 and the bottom cover 12 can be improved.

In a realizable implementation, the width of the welding mark 18 is greater than 0 mm and less than or equal to 1 mm, where the width of the welding mark 18 may be 0.3 mm, 0.5 mm, 0.8 mm or 1 mm. The width of the welding mark 18 is within the above range, on the one hand, the top shell 11 and the bottom cover 12 can be welded securely and sealed well, and on the other hand, the welding workload can be reduced, thus reducing the manufacturing cost.

In a realizable implementation, a ratio of a coverage area of the first conductive member 31 on the bottom cover 12 to an area of the bottom cover 12 is 0.4-0.99, where the ratio may be 0.4, 0.6, 0.8 or 0.99. The ratio is within the above range, which can make a contact area between the first conductive member 31 and the bottom cover 12 within a reasonable range, make the stability of connection between the first conductive member 31 and the bottom cover 12 better, prevent the relative sliding of the first conductive member 31 on the bottom cover 12, and improve the stability of the battery 100.

It should be noted that the battery core 60 includes at least two electrode sheets (not shown) with opposite polarities. The battery core 60 has a stacking region, and the at least two electrode sheets located in the stacking region are stacked with each other, and the electrode sheets located in the stacking region are parallel to a surface of the bottom cover 12 and a top surface of the top shell 11. In this way, the space occupied by the battery core 60 in a height direction of the accommodating cavity 20 can be maximized, and the energy density of the battery 100 can be improved. An isolation membrane is disposed between two electrode sheets with opposite polarities, which can keep a positive electrode sheet and a negative electrode sheet insulated.

It may be understood that in the embodiment of the present application, the flat battery core 60 has two arc-shaped sides, and a region between the two arc-shaped sides is the stacking region.

Specifically, as shown in FIG. 7, the first conductive member 31 includes a first connection plate 311 and a first bending plate 312 which are connected with each other, the first connection plate 311 is attached to the bottom cover 12, the first bending plate 312 is located between the battery core 60 and the annular side wall 111, and the first electrode tab 61 is welded on the first bending plate 312. The first connection plate 311 and the first bending plate 312 are perpendicular to each other in terms of their plate surfaces, so that the first bending plate 312 can be kept vertical between an end of the battery core 60 and the annular side wall 111, and a space occupied by the first bending plate 312 can be minimized. In addition, this can make the first bending plate 312 parallel to the electrode tab, which facilitates the electrical connection between them.

In a realizable implementation, as shown in FIG. 9, the first connection plate 311 has a bump 3111 on a side far from the accommodating cavity 20, and the bump 3111 penetrates through the through hole 13. In this way, the first conductive member 31 may be electrically connected with an external electrode through the bump 3111.

Specifically, there is a first gap between an outer periphery edge of the bump 3111 and a hole wall of the through hole 13. A width of the first gap ranges from 0.1 mm to 2 mm, and the width of the first gap may specifically be 0.1 mm, 0.5 mm, 1.5 mm or 2 mm. When the gap is less than 0.1 mm, a distance between the bump 3111 and the bottom cover 12 is too close. If the first conductive member 31 is offset or there is an assembly error, the bump 3111 and the bottom cover 12 are easily contacted and short-circuited. When the gap is greater than 2 mm, the gap between the bump 3111 and the bottom cover 12 is too large, which easily affects the sealing performance of the housing 10.

In addition, the insulating adhesive layer 40 has an overflow portion located in the first gap, so that on the one hand, the insulating adhesive layer 40 can be prevented from sliding on the bottom cover 12, and on the other hand, a portion of the bump 3111 can be bonded to prevent the bump 3111 from sliding, which leads to the electrical contact between the bump 3111 and the bottom cover 12.

It should be noted that the first gap may be filled with a sealing insulator. In this way, the sealing insulator insulates the bump 3111 from the bottom cover 12, which makes the battery 100 less prone to being short-circuited and improves the use stability of the battery 100.

As shown in FIG. 10, there is a second spacing L2 between the first bending plate 312 and the annular side wall 111, and the second spacing L2 ranges from 0.2 mm to 3 mm. The second spacing L2 may be 0.2 mm, 0.8 mm, 1.3 mm, 2 mm, 2.5 mm or 3 mm. When the second spacing L2 is less than 0.2 mm, the assembly difficulty of the first conductive member 31 and the battery core 60 is increased. When the spacing is greater than 3 mm, an overall size of the battery 100 is increased, which is not conducive to the miniaturization of the battery 100.

In a realizable implementation, a first insulating layer (not shown) is disposed between the first bending plate 312 and the battery core 60, and a second insulating layer 50 is disposed between the first bending plate 312 and the annular side wall 111. In this way, insulation between the first bending plate 312 and the top shell 11, and between the first bending plate 312 and the battery core 60 can be maintained, so as to avoid the short circuit of the first conductive member 31.

In a realizable implementation, as shown in FIG. 7, a second conductive member 32 is disposed within the accommodating cavity 20, and at least part of the second conductive member 32 is located between the second electrode tab 62 and the housing 10, and electrically connects the second electrode tab 62 and the housing 10. The second conductive member 32 and the first conductive member 31 are insulated from each other. In this way, a portion of the second conductive member 32 is located between the second electrode tab 62 and the annular side wall 111, thereby electrically connecting the second electrode tab 62 and the annular side wall 111.

It should be noted that in the embodiment of the present application, the first conductive member 31 and the second conductive member 32 may be collectively referred to as a conductive member 30, and the main function of the conductive member 30 is to electrically connect the electrode tabs of the battery core 60 with the housing 10 or an external electrode.

Specifically, the second conductive member 32 includes a second connection plate 321 and a second bending plate 322 which are connected with each other. The second connection plate 321 is attached on the bottom cover 12, and the second bending plate 322 is located between the battery core 60 and the annular side wall 111, and the second electrode tab 62 is welded on the second bending plate 322.

It should be noted that in the specific assembly, the first electrode tab 61 is welded to the first bending plate 312 and the second electrode tab 62 is welded to the second bending plate 322. In this way, welding may be carried out before the assembly of the housing 10, which is beneficial to reducing the manufacturing difficulty of the battery 100, at the same time, the second electrode tab 62 is welded to the annular side wall 111 through the second bending plate 322, that is, the second electrode tab 62 is indirectly fixed to the annular side wall 111, compared with the direct welding between the second electrode tab 62 and the annular side wall 111, this fixing method is not easy to weld through the electrode tabs during welding.

It should be noted that shapes of the first connection plate 311 and the second connection plate 321 may be the same or different, and the specific shapes may be regular or irregular, and no limitation is made in the embodiment of the present application.

In a realizable implementation, a height difference between the first connection plate 311 and the second connection plate 321 is less than 0.3 mm, so that the first connection plate 311 and the second connection plate 321 can be located on the same plane as much as possible, and the energy density of the battery core 60 can be maximized as much as possible.

As shown in FIG. 7, there is a second gap between the first connection plate 311 and the second connection plate 321 in a horizontal direction. A width L of the second gap ranges from 0.5 mm to 5 mm, and the width L may be specifically 0.5 mm, 1 mm, 2 mm, 3 mm, 4 mm or 5 mm. When the width L is less than 0.5 mm, a distance between the first conductive member 31 and the second conductive member 32 is too short. If the conductive member 30 is offset or there is an assembly error, the first conductive member 31 and the second conductive member 32 are easily contacted and short-circuited. When the width L is greater than 5mm, the width L between the first conductive member 31 and the second conductive member 32 is too large, which results in that a contact area between the conductive member 30 and the bottom cover 12 is too small, and affects the assembly stability of the conductive member 30.

In a realizable implementation, the second gap may be filled with a porous insulator (not shown). On the one hand, the first conductive member 31 may be insulated from the second conductive member 32, and on the other hand, electrolyte may be stored. Specifically, the porous insulator may be foam.

In the embodiment of the present application, the first electrode tab 61 and the second electrode tab 62 are located at a same end of the battery core 60. The first bending plate and the second bending plate 322 are located at a same end of the battery core 60. The first electrode tab 61 is located on a side of the first bending plate 312 facing away from the battery core 60, and the second electrode tab 62 is located on a side of the second bending plate 322 facing away from the battery core 60. In this way, it is beneficial to the welding and assembly of the battery 100.

In the embodiment of the present application, the first electrode tab 61 is a positive electrode tab, the second electrode tab 62 is a negative electrode tab, and the housing 10 is electrically connected with the second conductive member 32. The housing 10 as a whole is a negative electrode, and the first conductive member 31 is a positive electrode. It may be understood that the housing 10 as a whole is a positive electrode and the first conductive member 31 is a negative electrode after a switch to the electrical connection mode of the electrode tabs of the battery core 60 with the first conductive member 31 and the second conductive member 32.

In a realizable implementation, as shown in FIG. 10, FIG. 13 and FIG. 14, a third insulating layer 70 is further included, which is located between the battery core 60 and the first conductive member 31, and between the battery core 60 and the second conductive member 32. In this way, electrical contact between the conductive member 30 and the battery core 60 can be avoided, and short circuit can be avoided. It should be noted that the third insulating layer 70 may include three parts, the first part is located between the electrode tabs and the end of the battery core 60, the second part is located between the battery core 60 and the connection plate, and the third part is located at the tail of the battery core 60.

In a realizable implementation, there is a third spacing between an end of the first electrode tab 61 and an end of the second electrode tab 62, and the third spacing is greater than or equal to 0 mm and less than 1 mm. In this way, the end of the first electrode tab 61 and the end of the second electrode tab 62 may be as flush as possible, and the assembly difficulty of the first electrode tab 61 and the second electrode tab 62 may be reduced. It should be noted that the end of the first electrode tab 61 refers to an end of the first electrode tab 61 close to the annular side wall 111, and the end of the second electrode tab 62 refers to an end of the second electrode tab 62 close to the annular side wall 111.

In a realizable implementation, an area of the first connection plate 311 is larger than an area of the second connection plate 321, and a ratio of the area of the first connection plate 311 to the area of the second connection plate 321 ranges from 1 to 9.9. Specifically, the area of the first connection plate 311 may be 1 time, 3 times, 7 times or 9.9 times of the area of the second connection plate 321. In this way, an arrangement manner of the first conductive member 31 and the second conductive member 32 may be diversified, which is beneficial to the arrangement of the conductive member 30.

In a realizable implementation, the annular side wall 111 is provided with a reinforcing sheet 14 and a liquid injection port 15 which are spaced apart, and the liquid injection port 15 links the outside of the housing 10 to the accommodating cavity 20. In this way, welding with the external electrode may be performed through the reinforcing sheet 14, which can prevent the housing 10 from being damaged; and the electrolyte may be injected conveniently by disposing the liquid injection port 15. In addition, a sealing sheet 16 is disposed on the liquid injection port 15, so that after the electrolyte is injected, the liquid injection port 15 may be sealed by welding with the sealing sheet 16, so as to avoid liquid leakage of the battery 100. The top cover 112 may also be provided with a pressure relief groove 17, and the pressure relief groove 17 is disposed close to the first electrode tab 61 or the second electrode tab 62, so that it is convenient to relieve the pressure of the battery 100 and prevent the battery 100 from exploding. It should be noted that the top cover 112 may be thinned to form the pressure relief groove 17, and the pressure relief groove 17 may have a shape which is an "L" shape, an "0" shape or other shape.

Specifically, the battery core 60 is also provided with a finishing glue (not shown), which is located on the plane of the electrode sheet close to the top cover 112 and contacts with the inner wall surface of the top cover 112. In this way, it can be conducive to the assembly of the battery core 60, and the battery core 60 is not prone to bonding failure at the finishing glue.

It should be noted that since the housing 10 is a negative electrode, a position of the reinforcing sheet 14 may be adjusted according to a position of the external negative electrode. Disposing the reinforcing sheet 14 close to the external negative electrode is beneficial to welding. It may be understood that the reinforcing sheet 14 and the second electrode tab 62 are located on opposite sides of the annular side wall 111, which is beneficial to welding, and may avoid welding through the annular side wall 111 and the second electrode tab 62 during the welding.

As shown in FIG. 11 and FIG. 12, an embodiment of the present application provides another battery. A second electrode tab 62 of the battery 100 is welded to an annular side wall 111, and a support plate 19 may be disposed in a region of the bottom cover 12 where no first conductive member 31 is disposed. An upper surface of the support plate 19 may be flush with an upper surface of a connection plate of a first conductive member 31, so that a lower surface of a battery core 60 may be ensured to have a complete support surface and the battery core 60 can be kept in a stable state.

It should be noted that the second electrode tab 62 is directly fixed on the annular side wall 111 by welding, which can effectively prevent the battery core 60 from sliding in the accommodating cavity 20 and improve the stability of the battery 100. Moreover, a distance between the first electrode tab 61 and the annular side wall 111 is greater than a distance between the second electrode tab 62 and the annular side wall 111, so that it can prevent the first electrode tab 61 from contacting the annular side wall 111, and the battery 100 can be prevented from short-circuiting.

Other technical features of the battery 100 are the same as those of the first kind of battery, and will not be described here.

In the description of the embodiments of the present application, it should be understood that unless otherwise specified and defined, terms "installation", "connected" and "connecting" should be broadly understood, for example, they may be fixed connection, indirect connection through an intermediary, internal communication between two elements or interaction between two elements. For those of skill in the art, the specific meanings of the above terms in the present application may be understood according to the specific circumstances. an orientation or a position relationship indicated by terms "upper", "lower", "front", "rear", "vertical", "horizontal", "top", "bottom", "inner" and "outer" is based on an orientation or positional relationship shown in the drawings, which is only for the convenience of describing the present application and simplifying the description, rather than indicating or implying that the referred devices or elements must have a specific orientation, or be constructed and operated in a specific orientation, therefore, it should not be understood as a limitation to the present application In the description of the present application, "a plurality of' means two or more, unless it is precisely and specifically specified otherwise.

Terms "first", "second", "third" and "fourth" used in the description and claims of the present application and the above drawings are used to distinguish similar objects, and are not necessarily used to describe a specific order or sequence. It should be understood that the data so used may be interchanged under appropriate cases, so that the embodiments of the present application described herein may be implemented, for example, in other orders than those illustrated or described herein. In addition, terms "including" and "having" and any variations thereof are intended to cover non-exclusive inclusion, for example, a process, method, system, product or equipment that includes a series of steps or units is not necessarily limited to those explicitly listed, but may include other steps or units not explicitly listed or inherent to such process, method, product or equipment.

Finally, it should be noted that the above embodiments are only used to illustrate the technical solutions of the present application, but not to limit them; although the present application is illustrated in detail with reference to the above embodiments, those of ordinary skill in the art should understand that the technical solutions described in the above embodiments may still be modified or some or all of the technical features therein may be equivalently replaced; and these modifications or replacements do not make the essence of the corresponding technical solutions deviate from the scope of the technical solutions of the embodiments of the present application.

## Claims

1. A battery, comprising a housing which is conductive and a battery core, wherein the housing comprises a top shell and a bottom cover, the top shell comprises a top cover and an annular side wall connected to the top cover, the top shell is covered on the bottom cover to collaboratively define an accommodating cavity, and the battery core is located in the accommodating cavity;
a first conductive member is disposed within the accommodating cavity, and an insulating adhesive layer is disposed between the first conductive member and the bottom cover, and the insulating adhesive layer connects the first conductive member and the bottom cover; a through hole is disposed on the bottom cover, and the first conductive member covers the through hole; the annular side wall is welded with the bottom cover at an edge on a side close to the bottom cover to form a welding mark;
there is a first spacing between the welding mark and the insulating adhesive layer, and a width of the first spacing is more than 3 times of a width of the welding mark; and
the first electrode tab of the battery core is electrically connected with the first conductive member, and the second electrode tab of the battery core is electrically connected with the housing.

2. The battery according to claim 1, wherein the annular side wall has a flange at the edge on the side close to the bottom cover, and the flange is welded with the bottom cover to form the welding mark, and the welding mark is disposed around an outer periphery of the annular side wall.

3. The battery according to claim 1, wherein the width of the welding mark is greater than 0 mm and less than or equal to 1 mm.

4. The battery according to claim 1, wherein a ratio of a coverage area of the first conductive member on the bottom cover to an area of the bottom cover is 0.4 to 0.99.

5. The battery according to claim 1, wherein the battery core comprises at least two electrode sheets with opposite polarities, the battery core has a stacking region, the at least two electrode sheets located in the stacking region are stacked with each other, and the electrode sheets located in the stacking region are parallel to a surface of the bottom cover and/or a top surface of the top shell; and an isolation membrane is disposed between two electrode sheets with opposite polarities.

6. The battery according to any one of claims 1 to 5, wherein the first conductive member comprises a first connection plate and a first bending plate which are connected with each other, the first connection plate is attached to the bottom cover, the first bending plate is located between the battery core and the annular side wall, and the first electrode tab is welded on the first bending plate.

7. The battery according to claim 6, wherein the first connection plate has a bump on a side far from the accommodating cavity, and the bump penetrates through the through hole.

8. The battery according to claim 7, wherein there is a first gap between an outer periphery edge of the bump and a hole wall of the through hole; a width of the first gap ranges from 0.1 mm to 2 mm; and the insulating adhesive layer has an overflow portion located in the first gap.

9. The battery according to claim 8, wherein the first gap is filled with a sealing insulator.

10. The battery according to claim 6, wherein there is a second spacing between the first bending plate and the annular side wall, and the second spacing ranges from 0.2 mm to 3 mm.

11. The battery according to claim 6, wherein a first insulating layer is disposed between the first bending plate and the battery core, and/or, a second insulating layer is disposed between the first bending plate and the annular side wall.

12. The battery according to any one of claims 1 to 5, wherein the second electrode tab is welded to the annular side wall.

13. The battery according to claim 12, wherein a distance between the first electrode tab and the annular side wall is greater than a distance between the second electrode tab and the annular side wall.

14. The battery according to claim 6, wherein a second conductive member is disposed within the accommodating cavity, and at least part of the second conductive member is located between the second electrode tab and the housing, and electrically connects the second electrode tab and the housing; and
the second conductive member and the first conductive member are insulated from each other.

15. The battery according to claim 14, wherein the second conductive member comprises a second connection plate and a second bending plate which are connected with each other, the second connection plate is attached to the bottom cover, the second bending plate is located between the battery core and the annular side wall, and the second electrode tab is welded on the second bending plate.

16. The battery according to claim 15, wherein a height difference between the first connection plate and the second connection plate is less than 0.3 mm;
there is a second gap between the first connection plate and the second connection plate; and
a width of the second gap ranges from 0.5 mm to 5 mm, and/or, the second gap is filled with a porous insulator.

17. The battery according to claim 15, wherein the first electrode tab and the second electrode tab are located at a same end of the battery core; and the first bending plate and the second bending plate are located at a same end of the battery core.

18. The battery according to claim 15, wherein the first electrode tab is located on a side of the first bending plate facing away from the battery core, and/or the second electrode tab is located on a side of the second bending plate facing away from the battery core.

19. The battery according to claim 15, further comprising a third insulating layer which is located between the battery core and the first conductive member, and between the battery core and the second conductive member.

20. The battery according to any one of claims 14 to 19, wherein there is a third spacing between an end of the first electrode tab and an end of the second electrode tab, and the third spacing is greater than or equal to 0 mm and less than or equal to 1 mm.

21. The battery according to any one of claims 15 to 19, wherein an area of the first connection plate is larger than an area of the second connection plate, and a ratio of the area of the first connection plate to the area of the second connection plate ranges from 1 to 9.9.

22. The battery according to any one of claims 1 to 5, wherein the annular side wall is provided with a reinforcing sheet and a liquid injection port which are spaced apart, and the reinforcing sheet and the second electrode tab are located on opposite sides of the annular side wall, and the liquid injection port links an outside of the housing to the accommodating cavity; a pressure relief groove is disposed on the top cover, and the pressure relief groove is disposed close to the first electrode tab or the second electrode tab;
a sealing sheet is disposed on the liquid injection port, and the sealing sheet seals the liquid injection port;
and/or, the battery core is further provided with a finishing glue, and the finishing glue is located on a side of the battery core close to the top cover.
